(19)

Europäisches
Patentamt
European
Patent Office
Office européen
des brevets

(11) **EP 3 185 170 A1**

(12) **EUROPEAN PATENT APPLICATION**

(43) Date of publication:
**28.06.2017 Bulletin 2017/26**

(51) Int Cl.:
**G06K 9/00** *(2006.01)*   **G05D 1/00** *(2006.01)*
**G01C 21/00** *(2006.01)*   **H04N 5/00** *(2011.01)*

(21) Application number: **15307108.9**

(22) Date of filing: **22.12.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Thomson Licensing
92130 Issy-les-Moulineaux (FR)**

(72) Inventors:
• **Brune, Thomas
  30449 Hannover (DE)**
• **Sorgi, Lorenzo
  30655 Hannover (DE)**
• **Weber, Michael
  30559 Hannover (DE)**

(74) Representative: **Huchet, Anne et al
TECHNICOLOR
1-5, rue Jeanne d'Arc
92130 Issy-les-Moulineaux (FR)**

(54) **METHOD FOR CONTROLLING MOVEMENT OF AT LEAST ONE MOVABLE OBJECT, COMPUTER READABLE STORAGE MEDIUM AND APPARATUS CONFIGURED TO CONTROL MOVEMENT OF AT LEAST ONE MOVABLE OBJECT**

(57) A method for controlling movement of at least one movable object, a computer readable storage medium and an apparatus (18) configured to control movement of at least one movable object (2a, 2b). Position information of the at least one movable object (2a, 2b) is retrieved (40). The retrieved position information is compared (41) with a viewing zone (4a, 4b) of the camera to determine if the movable object (2a, 2b) is about to interfere with the viewing zone (4a, 4b). An alert is generated (42) for the at least one movable object (2a, 2b) in case the movable object (2a, 2b) is about to interfere with the viewing zone (4a, 4b) and movement of the at least one movable object (2a, 2b) is controlled (43) responsive to the alert.

Retrieve position information
of movable object  — 40

Compare position information
with viewing zone of camera  — 41

Generate alert in case of
imminent interference  — 42

Control movement of movable
object responsive to alert  — 43

**Fig. 2**

EP 3 185 170 A1

**Description**

**FIELD**

The present solution relates to a method for controlling a movement of at least one movable object relative to a camera capturing a sequence of images of a scene, and to an apparatus and a computer readable storage medium configured to control movement of at least one movable object relative to a camera capturing a sequence of images of a scene. The solution further relates to a vehicle, in particular an unmanned airborne vehicle, and to a system comprising a plurality of vehicles.

**BACKGROUND**

In the area of still image and video capture, using more than one camera opens up a variety of possibilities for acquisition of image data that can be used for unusual and creative image and movie effects. Furthermore, watching a scene from different points of view can provide the user more information, for example when watching sports events. When a scene can be captured from different points of view, applications like the "bullet time" capture can be realized. Using this technique, a steady ring of cameras almost hidden by a green screen is implemented. When capturing outdoor images with a non-steady multi camera arrangement, for example in action sports, camera equipped robots can be used. Even for private use, unmanned airborne vehicles (UAV) are becoming more and more popular. In a multi camera system, one camera robot might, however, capture a scene in which there is another camera robot visible. This might be undesirable, but the removal of the robots is extremely time-consuming, in particular for video captures. Each single frame has to be inspected and manipulated manually in order to remove the robot(s) in the images.

**SUMMARY**

It would be desirable to provide a method for controlling a movement of at least one movable object relative to a camera capturing a scene, a computer readable storage medium and an apparatus configured to control movement of at least one movable object, a vehicle and a system comprising a plurality of vehicles, wherein the quality of the image data captured by the camera shall be enhanced. Enhancement is desirable in particular with respect to visibility of undesired objects, such as other image capturing devices forming part of a camera system comprising the camera.
According to one aspect, a method for controlling a movement of at least one movable object relative to a camera capturing a sequence of images of a scene comprises:

- retrieving position information of the at least one movable object;
- comparing the retrieved position information with a viewing zone of the camera to determine if the movable object is about to interfere with the viewing zone;
- generating an alert for the at least one movable object in case the movable object is about to interfere with the viewing zone; and
- controlling movement of the at least one movable object responsive to the alert.

The present solution is based on the following considerations. In a scenario in which manually or autonomously controlled robots are operated, which are movable objects, the control of the robots is impacted to avoid visibility of the robots in the viewing zone of the camera. The camera may be a static camera of a camera mounted on one of the robots. In other words, the control of the movable objects is influenced in that each of it keeps clear of the viewing range or visible zone of at least one camera. The camera is in particular carried by another robot, i.e. another movable object. A peer of cameras can be mounted on movable objects, in particular one camera on each, and all robots forming the group communicate such that every robot keeps off the viewing zone of all the other cameras. In principle, this also applies to movable objects being equipped with other devices having a directional characteristic, for example directional microphones.
The image data, for example a stream of images or frames, still pictures, 3D-Images or 3D movie data, being captured by the peer of cameras does require significantly less post-processing, as no undesired robots need to be erased from the frames. High quality image data can be provided. This applies to both, still pictures imaging a scene from different viewing angles and to streams of frames. These can for example provide a basis for visual effects of detaching the time and space of the camera from that of its visible subject. At the same time, the system is highly flexible. Unlike traditional arrays comprising a large number of cameras being used to capture image data forming the basis for the mentioned type of visual effect, the system for performing the method according to aspects of the present solution can be operated more flexibly under various (environmental) conditions, at significantly lower cost and within a shorter preparation phase.

In an advantageous embodiment, the step of controlling the movement includes modifying a motion, in particular a direction of motion, of the movable object such that the movable object avoids an interference with the viewing zone.

Advantageously, motion of the movable object, for example of a robot, in particular of an unmanned airborne vehicle, is actively controlled such that movement into the viewing zone of a camera is avoided. In particular for airborne vehicles, it is important to recognize that the viewing zone is a three-dimensional cone being defined by the viewing angle of the applied camera. Furthermore, said control is in particular performed in real time.

According to a further advantageous aspect, a method for controlling at least a first movable object and a second movable object, each having a camera, comprises:

- retrieving first position information of the first movable object;
- comparing the first position information with a second viewing zone of the camera of the second movable object, to determine if the first movable object is about to interfere with the second viewing zone;
- generating an alert for the first movable object in case the first movable object is about to interfere with the second viewing zone; and
- controlling movement of the first movable object responsive to the alert.

The method according to this aspect allows controlling a peer of cameras, which are in particular mounted on unmanned airborne vehicles. Every vehicle carries at least one camera. In other words, every movable object carrying a camera of the peer of cameras keeps clear of the viewing zone of all the other cameras, which are mounted on the further movable objects. This highly flexible system of cameras, unlike traditional arrays of cameras, can be applied to flexibly capture image data from various different viewing angles.

In one embodiment, a security zone is defined, said security zone comprising the viewing zone. This is in particular performed for every camera, if a peer of cameras is applied. Furthermore, the retrieved position information is compared with borders of the security zone and it is determined if the at least one movable object interferes with the security zone, and the alert is generated in case the movable object interferes with the security zone.

Use of a security zone is one practicable way to determine if a movable object is about to interfere with the viewing zone of a camera. In particular, the security zone is chosen such that when the movable object crosses a border of the security zone there remains sufficient time to control movement of the movable object before it interferes with the viewing zone.

Similarly, a computer readable storage medium has stored therein instructions enabling controlling a movement of at least one movable object relative to a camera capturing a sequence of images of a scene, wherein the instructions, when executed by a computer, cause the computer to:

- retrieve position information of the at least one movable object;
- compare the retrieved position information with a viewing zone of the camera to determine if the movable object is about to interfere with the viewing zone;
- generate an alert for the at least one movable object in case the movable object is about to interfere with the viewing zone; and
- control movement of the at least one movable object responsive to the alert.

Same or similar advantageous aspects, which have been mentioned with respect to the method for generating a panoramic view, apply to the computer readable storage medium in a same or similar way. This, in particular, pertains to the advantageous embodiments and aspects, which are mentioned above.

According to another solution of the above problem, there is an apparatus configured to control movement of at least one movable object relative to a camera capturing a sequence of images of a scene, the apparatus comprising:

- an input unit configured to retrieve position information of the at least one movable object;
- a comparing unit configured to compare the retrieved position information with a viewing zone of the camera to determine if the movable object is about to interfere with the viewing zone;
- a notification unit configured to generate an alert for the at least one movable object in case the movable object is about to interfere with the viewing zone; and
- a movement controller configured to control movement of the at least one movable object responsive to the alert.

With respect to the above-referred computer readable storage medium and the apparatus, same or similar aspects and advantages which have been mentioned relative to the method apply in the same or similar way.

According to another aspect of the present solution, a vehicle, in particular an unmanned airborne vehicle, comprises:

- a position sensor configured to determine position information of the vehicle;
- a data communication interface configured to receive local information about a viewing zone of a camera;
- a processing unit configured to compare the position information with the viewing zone of the camera to determine if the vehicle is about to interfere with the viewing zone, and to generate an alert in case the vehicle is about to interfere with the viewing zone; and
- a movement controller configured to control movement of the vehicle responsive to the alert, in particular a direction of motion, such that an interference with the viewing zone is avoided.

According to an advantageous embodiment, the vehicle further comprises a camera, wherein the data communication interface is further configured to establish a data link, in particular a wireless data link, with further vehicles of the same or similar type, wherein local information about a viewing zone of the camera is communicated to the further vehicles.

The plurality of vehicles, which are in particular unmanned airborne vehicles, can be applied to acquire image data and/or audio/video data from a variety of different viewing angles. The cameras on the unmanned airborne vehicles can form a peer of cameras, which is highly flexible.

Hence, according to another solution of the problem to be solved, there is a system comprising a plurality of vehicles, in particular a plurality of unmanned airborne vehicles being configured according to the above-referred aspects.

Furthermore, the object is also solved by an apparatus configured to control movement of at least one movable object relative to a camera capturing a sequence of images of a scene, the apparatus comprising a processing device and a memory device having stored therein instructions, which, when executed by the processing device, cause the apparatus to:

- retrieve position information of the at least one movable object;
- compare the retrieved position information with a viewing zone of the camera to determine if the movable object is about to interfere with the viewing zone;
- generate an alert for the at least one movable object in case the movable object is about to interfere with the viewing zone; and
- control movement of the at least one movable object responsive to the alert.

## BRIEF DESCRIPTION OF THE DRAWINGS

Fig. 1      a simplified schematic top view showing two movable objects each being equipped with a camera, said cameras having different viewing zones;

Fig. 2      schematically illustrates a method for controlling a movement of at least one movable object relative to a camera capturing a sequence of images of a scene;

Fig. 3      depicts a simplified block diagram of an apparatus configured to control movement of at least one movable object; and

Fig. 4 to 6      are simplified schematic illustrations of a situation in which two movable objects are controlled so as to not interfere with the viewing zone of the respective object, wherein there is no security zone (Fig. 4) and two different types of security zone (Figs. 5 and 6).

## DETAILED DESCRIPTION OF PREFERRED EMBODIMENTS

For a better understanding the principles of embodiments of the present solution shall now be explained in more detail in the following description with reference to the figures. It is understood that the present solution is not limited to these exemplary embodiments and that specified features can also expediently be combined and/or modified without departing from the scope of the present solution as defined in the appended claims. In the drawings, the same or similar types of elements or respectively corresponding parts are provided with the same reference numbers in order to prevent the item from needing to be reintroduced.

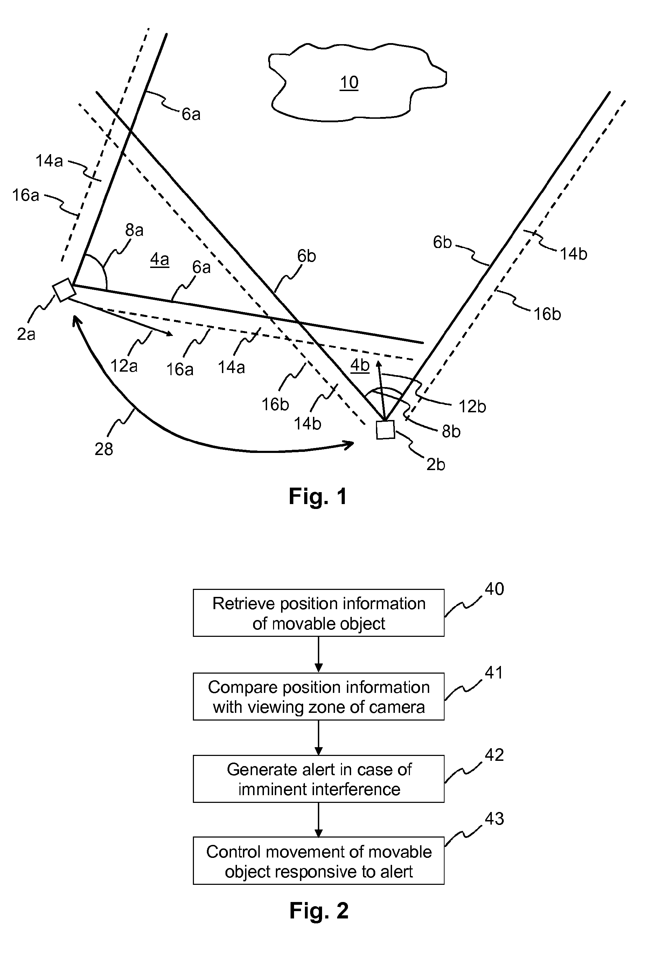

Fig. 1 depicts a simplified schematic top view showing a scenario with a first movable object 2a and a second movable object 2b. The movable objects 2a, 2b are each equipped with a camera (not shown), namely a first camera having a first viewing zone 4a and a second camera having a second viewing zone 4b. Each viewing zone is illustrated in Fig. 1 using a pair of two margin lines, namely the first margin lines 6a and the second margin lines 6b. These include a first viewing angle 8a and a second viewing angle 8b, respectively. The viewing angles 8a, 8b of the cameras shall each be defined by their respective focal length f, to which reference is made further below.

Each of the cameras captures a sequence of images or frames of a scene 10, which is located in the first viewing zone 4a and in the second viewing zone 4b.

Furthermore, in the scenario of Fig. 1, the movable objects 2a, 2b together with the cameras shall be moving, which means each movable object 2a, 2b has a direction of motion. The first movable object 2a has a first direction of motion 12a (indicated by a corresponding vector) and the second movable object has a second direction of motion 12b (also indicated by a vector).

In addition to this, there are a first security zone 14a and a second security zone 14b, comprising the first viewing zone 4a and the second viewing zone 4b, respectively. The first and second security zones 14a, 14b are depicted in Fig. 1 using a pair of dashed margin lines, i.e. the first security margin lines 16a and the second security margin lines 16b. The particular application of the security zones 14a, 14b will be explained in the description further below.

Fig. 2 schematically illustrates a method for controlling a movement of at least one movable object relative to a camera capturing a sequence of images of a scene. Position information of the at least one movable object 2a, 2b is retrieved 40. The retrieved position information is compared 41 with a viewing zone 4a, 4b of the camera to determine if the movable object 2a, 2b is about to interfere with the viewing zone 4a, 4b. In case the movable object 2a, 2b is about to interfere with the viewing zone 4a, 4b, an alert is generated 42 for the at least one movable object 2a, 2b. Movement of the at least one movable object 2a, 2b is then controlled 43 responsive to the alert.

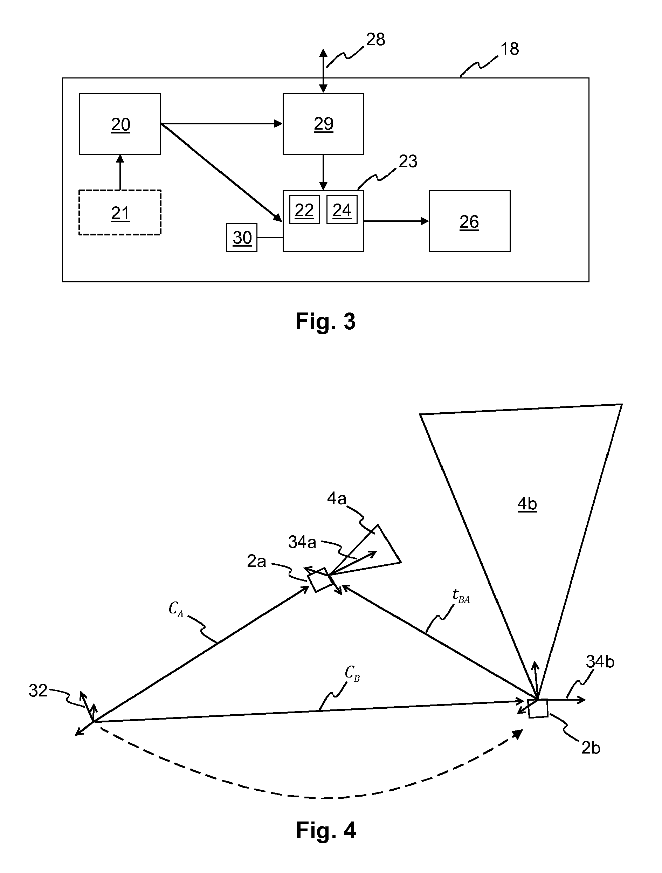

Fig. 3 shows a simplified block diagram of an apparatus 18 configured to control movement of at least one movable object 2a, 2b. The apparatus 18 is in particular a part of the first and/or the second movable object 2a, 2b. The apparatus 18 comprises an input unit 20 configured to retrieve position information of at least one movable object 2a, 2b. The input unit 20 receives the position information, for example, from a position sensor 21 or via a data link. The position sensor can be a GPS-sensor or the like. The latter can also form part of the apparatus 18, in particular if the apparatus 18 is included in one of the movable objects 2a, 2b.

Further in particular, the movable objects 2a, 2b are vehicles, for example unmanned airborne vehicles, frequently referred to as UAVs. The retrieved position information is forwarded to a comparing unit 22. This in particular forms part of a processing unit 23, for example a microcontroller or another suitable unit. The comparing unit 22 is configured to compare the retrieved position information with data characterizing the position of at least one of the viewing zones 4a, 4b of the camera(s).

By way of an example, it is assumed that the apparatus 18 forms part of the first movable object 2a. Its comparing unit 22 compares the position information of this particular movable object 2a with data characterizing the second viewing zone 4b of the second movable object 2b (see Fig. 1). Within this comparison, it is determined if the first movable object 2a is about to interfere with the second viewing zone 4b. Details relative to this will be discussed further below with reference to Figs. 4 to 6.

In addition to the mentioned units in the apparatus 18, there is a notification unit 24, which can also form part of the processing unit 23. The notification unit 24 is configured to generate an alert for the movable object 2a, 2b, in case the movable object 2a, 2b is about to interfere with the viewing zone 4a, 4b. When sticking back to the above example, the notification unit 24 is configured to generate an alert for the first movable object 2a, if this particular movable object 2a is about to interfere with the second viewing zone 4b of the second movable object 2b, i.e. of its camera.

In addition to this, there is a movement controller 26, which is configured to control movement of the movable object 2a, 2b, responsive to the alert. In particular, a direction of motion 12a, 12b is changed such that an interference with the viewing zone 4a, 4b is avoided. When making again reference to the above example, the first direction of motion 12a of the first movable object 2a will be changed in that the first movable object 2a avoids entering the second viewing zone 4b of the camera of the second movable object 2b.

In the above-described scenario, each movable object 2a, 2b has to be aware of data characterizing the local position of the viewing zones 4a, 4b of the respective other movable objects 2a, 2b. To enable the movable objects 2a, 2b to hold this information, there is a data link 28 between the objects (see Fig. 1). In particular, this is a wireless data link established using frequently known wireless communication technology such as WiFi, NFC, Bluetooth or the like. For establishing data communication via this data link 28, the apparatus 18 comprises a data communication interface 29. This is in particular configured to receive local information about the viewing zones 4a, 4b of the other cameras.

The movable objects 2a, 2b can be unmanned airborne vehicles forming a system comprising a plurality of similarly configured vehicles. The wireless data link 28 is then established between all the vehicles of the same type. These can form a system of vehicles representing a peer of cameras being useful for capturing of the scene 10, for example.

In a method for controlling the movement of a first movable object 2a and a second movable object 2b, each having a camera, as for example depicted in Fig. 1, first position information of the first movable object 2a is retrieved. This is, for example, performed using the position sensor 21. Then the first position information is compared with the second viewing zone 4b of the camera of the second movable object 2b to determine if the first movable object 2a is about to interfere with the second viewing zone 4b. An alert is generated for the first movable object 2a if the first movable object 2a is about to interfere with the second viewing zone 4b. Responsive to the alert, movement of the first movable object 2a is controlled in that a collision with the second viewing zone 4b is avoided.

A practicable solution for determining if a collision of one of the movable objects 2a, 2b with one of the viewing zones 4a, 4b of other movable objects 2a, 2b is about to occur is the use of security zones 14a, 14b. The security zones 14a 14b each comprise the respective viewing zone 4a, 4b and the retrieved position information is compared with the security zone 14a, 14b. It is determined if one of the movable objects 2a, 2b interferes with the security zone 14a, 14b and the alert is generated in case the movable object 2a, 2b interferes with the security zone 14a, 14b.

When making again reference to the above example, the first direction of motion 12a of the first movable object 2a is changed if the first movable object 2a interferes with the second security zone 14b of the second movable object 2b. Hence, information not only about the viewing zone 4a, 4b, but also about the security zone 14a, 14b is communicated via the data link 28 to the other movable objects 2a, 2b.

The apparatus 18 configured to control the movement of at least one movable object 2a, 2b in particular further comprises a memory device 30, in particular a non-volatile memory device, such as a flash memory or a hard disc, having stored therein instructions, which are executable by the processing unit 23, which is a processing device. These cause the processing unit 23 to retrieve position information, to compare the retrieved position information with data characterizing a position of the viewing zone 4a, 4b of the camera to generate an alert if the movable object 2a, 2b is about to interfere with the viewing zone 4a, 4b, and to control the movement of the movable object 2a, 2b in response to the alert.

Determination of a collision of one of the movable objects 2a, 2b with the viewing zone 4a, 4 of another movable object 2a, 2b and the security zone 14a, 14b of said movable objects 2a, 2b, respectively, will be now explained with reference to Figs. 4, 5, and 6.

Firstly, imaging of a point $M$ in space having the Cartesian coordinates $X, Y$ and $Z$ is considered. The imaging of this point on a sensor is defined by the below formula (1).

$$m = \begin{bmatrix} f & 0 & u_0 \\ 0 & f & v_0 \\ 0 & 0 & 1 \end{bmatrix} \begin{bmatrix} X \\ Y \\ Z \end{bmatrix} = KM = \begin{bmatrix} m_x \\ m_y \\ m_w \end{bmatrix} \tag{1}$$

$K$ is the transformation matrix of the imaging system. In this matrix, $f$ indicates the focal length of the imaging system defining the viewing angle. $u_0$ and $v_0$ represent the pixel coordinates in the image plane of the image sensor. Hence, $m$ is the image of the point $M$ on the image sensor. The image of the point M on the sensor is represented in homogeneous coordinates, which are $m_x$, $m_y$ and $m_w$. The pixel coordinates $u_0$ and $v_0$ are calculated according to formula (2) below.

$$p_b = \begin{bmatrix} \dfrac{m_x}{m_w} \\ \dfrac{m_y}{m_w} \end{bmatrix} = \begin{bmatrix} u_b \\ v_b \end{bmatrix} \tag{2}$$

In other words, $p_b$ is the image of the point $M$ on the image sensor. The transformation matrix or imaging matrix $K$ is also defined by formula (3), wherein $f$ is again the focal length and $u_0$ and $v_0$ (formula (1)) are calculated from the values of **camW** and **camH.**

$$\begin{bmatrix} f & 0 & \mathrm{camW} \cdot 0.5 \\ 0 & f & \mathrm{camH} \cdot 0.5 \\ 0 & 0 & 1 \end{bmatrix} \tag{3}$$

These define the resolution of the image sensor in horizontal direction or in the direction of the width of the sensor (**camW**) and in vertical direction or in the direction of the height of the sensor (**camH**).

Fig. 4 illustrates the calculation according to which it is determined whether one movable object 2a, 2b is captured by the camera of another movable object 2a, 2b. In other words, answering the question whether the movable objects 2a, 2b can see each other. Firstly, there is an arbitrary initial global coordinate system 32, in which the Cartesian coordinates $X, Y$ and $Z$ of the point $M$ are defined. In this coordinate system 32, the position of the first movable object 2a is defined by the vector $C_A$. The position of the second movable object 2b is defined by the vector $C_B$. A vector $t_{BA}$ pointing from the second movable object 2b towards the first movable object 2a is defined by formula (4) below.

$$t_{BA} = C_A - C_B \qquad (4)$$

For determination whether the first movable object 2a is in the viewing zone 4b of the second movable object 2b, the initial or world coordinate system 32 is converted into a second local coordinate system 34b of the second movable object 2b (illustrated by a dashed line in Figs. 4 to 6). This is performed by inserting a transformation matrix $R_B$ into the calculation according to formula (1) above, which results in formula (5) below.

$$m_b = K_B R_B t_{BA} = \begin{bmatrix} x_b \\ y_b \\ w_b \end{bmatrix} \qquad (5)$$

$K_B$ is the imaging matrix of the camera of the second movable object 2b and $R_B$, as mentioned, is the rotation and translation matrix transforming the global coordinate system 32 into the local coordinate system 34b.

The point, which is "imaged" onto the sensor of the camera of the second movable object 2b, is defined by the vector pointing from the second movable object 2b towards the first movable object 2a, i.e. $t_{BA}$. Similar to the point $M$ above, the position of the first movable object 2a is calculated in homogeneous coordinates $x_b$, $y_b$, and $w_b$.

The corresponding point on the image sensor is represented by formula (6) below.

$$p_b = \begin{bmatrix} \dfrac{x_b}{w_b} \\ \dfrac{y_b}{w_b} \end{bmatrix} = \begin{bmatrix} u_b \\ v_b \end{bmatrix} \qquad (6)$$

$u_b$ and $v_b$ are the pixel coordinates of the image of the first movable object 2a on the image sensor of the camera of the second movable object 2b.

Finally, it is determined, whether these pixel coordinates of the first movable object 2a, are in the image plane, to be more precise in the range of the sensor of the camera of the second movable object 2b.

According to formula (7) below, it is determined whether the pixel coordinates of the position of the first movable object 2a, namely $u_b$ and $v_b$, are in the image plane, which means if $u_b$ is between 0 and $W_B$ - 1 and $v_b$ is between 0 and $H_B$ - 1.

$$\left( \begin{bmatrix} u_b \\ v_b \end{bmatrix} \text{ is in the image plane } [0,0, W_B - 1, H_B - 1] \right) \qquad (7)$$

If formula (7) is fulfilled, the first movable object 2a is visible in the camera of the second movable object 2b. This causes the first movable object 2a to take action in that it leaves the viewing zone 4b of the camera of the second movable object 2b. This is in particular performed by the apparatus 18 forming part of the movable object 2b controlling the movement.

Similarly, calculations can be performed with respect to the visibility of the second movable object 2b in the first viewing zone 4a of the camera of the first movable object 2a. For this purpose, a vector $-t_{BA}$ is calculated and the initial and world coordinate system 32 is transformed into the first local coordinate system 34a of the first movable object 2a. Subsequently, the image matrix of the camera of the first movable object 2a is applied on the position of the second movable object 2b.

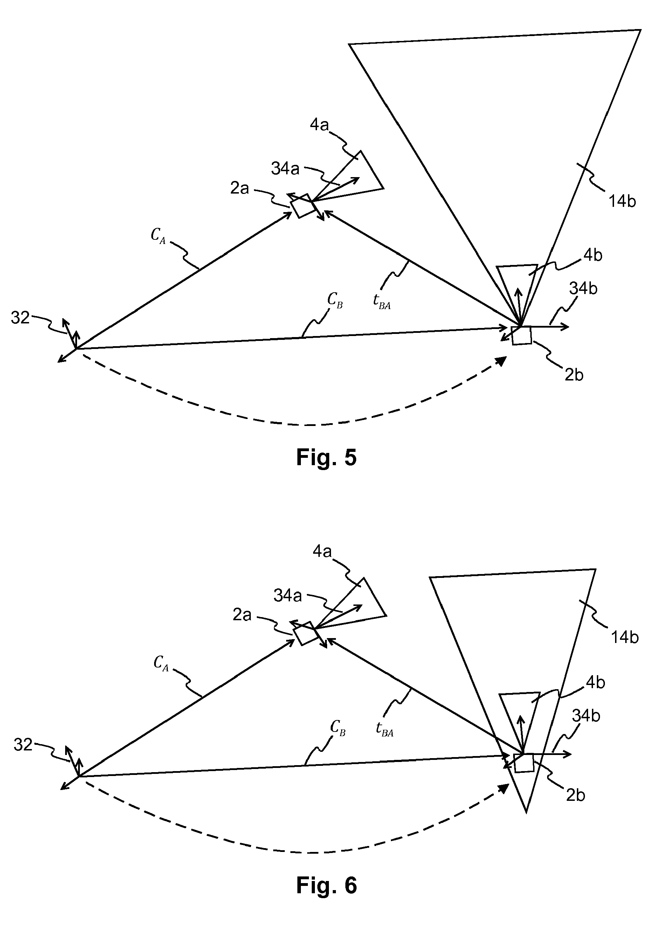

Fig. 5 refers to a situation in which a security zone 14 is defined. By way of an example only, this is depicted for the camera of the second movable object 2b only. The calculation is similar to that which was explained above with reference to

Fig. 4. The only difference is a change in the imaging matrix, which is now $K_{SB}$ (see formula (8) below).

$$m_b = K_{SB} R_B t_{BA} = \begin{bmatrix} x_b \\ y_b \\ w_b \end{bmatrix} \qquad (8)$$

By changing, for example, the focal length *f* (see formula (1)), the viewing angle of the camera of the second movable object 2b is widened. It is greater compared to the viewing angle defining the viewing zone 4b, which is the real viewing angle of the camera. By similar calculations, which were outlined with reference to the above formulas (1) to (8), it is determined whether the first movable object 2a is in the second security zone 14b of the second movable object 2b.

Another option for defining the security zone 14a, 14b is not altering the imaging matrix $K_B$ but by defining an offset of the position of the movable object 2a, 2b. This is illustrated in Fig. 6 and described by formula (9) below.

$$m_b = K_B \left( R_B t_{BA-} \begin{bmatrix} 0 \\ 0 \\ \delta \end{bmatrix} \right) = \begin{bmatrix} x_b \\ y_b \\ w_b \end{bmatrix} \qquad (9)$$

In the local coordinate system 34b, the position of the second movable object 2b is shifted reversely by the amount $\delta$. Hence, by application of the same imaging matrix $\boldsymbol{K_B}$, a security zone 14b is defined, which includes the real viewing zone 4b. Again, if a collision of the first movable object 2a with the second security zone 14b is detected, the first movement vector 12a (see Fig. 1) or the first direction of motion is changed in that the first movable object 2a keeps clear of the security zone 14b of the second movable object 2b.

The above example refers to a situation, in which a "collision" between the first movable object 2a and the second viewing zone 4b and the security zone 14b of the second movable object 2b, respectively, is explained. Similar mechanisms can be implemented for a plurality of movable objects 2a, 2b keeping clear of the viewing zone 4a, 4b and the security zone 14a, 14b of a camera or of a plurality of cameras. This in particular applies to a situation in which there is a peer of cameras, each camera being mounted on an unmanned airborne vehicle representing a movable object.

All named characteristics, including those taken from the drawings alone, and individual characteristics, which are disclosed in combination with other characteristics, are considered alone and in combination as important to the present solution. Embodiments according to the present solution can be fulfilled through individual characteristics or a combination of several characteristics. Features which are combined with the wording "in particular" or "especially" are to be treated as preferred embodiments.

**Claims**

1. A method for controlling a movement of at least one movable object (2a, 2b) relative to a camera capturing a sequence of images of a scene (10), the method **comprising:**

   - retrieving (40) position information of the at least one movable object (2a, 2b);
   - comparing (41) the retrieved position information with a viewing zone (4a, 4b) of the camera to determine if the movable object (2a, 2b) is about to interfere with the viewing zone (4a, 4b);
   - generating (42) an alert for the at least one movable object (2a, 2b) in case the movable object (2a, 2b) is about to interfere with the viewing zone (4a, 4b); and
   - controlling (43) movement of the at least one movable object (2a, 2b) responsive to the alert.

2. The method according to claim 1, **wherein** controlling (43) the movement includes modifying a motion of the movable object (2a, 2b) such that the movable object (2a, 2b) avoids an interference with the viewing zone (4a, 4b).

3. The method according to claim 1 or 2, **wherein** at least a first movable object (2a) and a second movable object (2b), each having a camera, are controlled, the method comprising:

   - retrieving first position information of the first movable object (2a);
   - comparing the first position information with a second viewing zone (4b) of the camera of the second movable object (2b), to determine if the first movable object (2a) is about to interfere with the second viewing zone (4b);
   - generating an alert for the first movable object (2a) in case the first movable object (2a) is about to interfere with the second viewing zone (4b); and

- controlling movement of the first movable object (2a) responsive to the alert.

4. The method according to anyone of the preceding claims, **wherein** a security zone (14a, 14b) is defined, the security zone (14a, 14b) comprising the viewing zone (4a, 4b), and wherein the retrieved position information is compared with the security zone (14a, 14b) and it is determined if the at least one movable object (2a, 2b) interferes with the security zone (14a, 14b), and the alert is generated in case the movable object (2a, 2b) interferes with the security zone (14a, 14b).

5. A computer readable storage medium having stored therein instructions enabling controlling a movement of at least one movable object (2a, 2b) relative to a camera capturing a sequence of images of a scene (10), wherein the instructions, when executed by a computer, cause the computer to:

   - retrieve (40) position information of the at least one movable object (2a, 2b);
   - compare (41) the retrieved position information with a viewing zone (4a, 4b) of the camera to determine if the movable object (2a, 2b) is about to interfere with the viewing zone (4a, 4b);
   - generate (42) an alert for the at least one movable object (2a, 2b) in case the movable object (2a, 2b) is about to interfere with the viewing zone (4a, 4b); and
   - control (43) movement of the at least one movable object (2a, 2b) responsive to the alert.

6. An apparatus (18) configured to control movement of at least one movable object (2a, 2b) relative to a camera capturing a sequence of images of a scene (10), the apparatus **comprising:**

   - an input unit (20) configured to retrieve (40) position information of the at least one movable object (2a, 2b);
   - a comparing unit (22) configured to compare (41) the retrieved position information with a viewing zone (4a, 4b) of the camera to determine if the movable object (2a, 2b) is about to interfere with the viewing zone (4a, 4b);
   - a notification unit (24) configured to generate (42) an alert for the at least one movable object (2a, 2b) in case the movable object (2a, 2b) is about to interfere with the viewing zone (4a, 4b); and
   - a movement controller (26) configured to control (43) movement of the at least one movable object (2a, 2b) responsive to the alert.

7. A vehicle **comprising:**

   - a position sensor (21) configured to determine position information of the vehicle;
   - a data communication interface (29) configured to receive local information about a viewing zone (4a, 4b) of a camera;
   - a processing unit (23) configured to compare (41) the position information with the viewing zone (4a, 4b) of the camera to determine if the vehicle is about to interfere with the viewing zone (4a, 4b), and to generate (42) an alert in case the vehicle is about to interfere with the viewing zone (4a, 4b); and
   - a movement controller (26) configured to control (43) movement of the vehicle responsive to the alert such that an interference with the viewing zone (4a, 4b) is avoided.

8. The vehicle according to claim 7, **further** comprising a camera, wherein the data communication interface (29) is further configured to establish a data link (28) with further vehicles of the same or a similar type, wherein local information about a viewing zone (4a, 4b) of the camera is communicated to the further vehicles.

9. A system **comprising** a plurality of vehicles according to claim 8.

10. An apparatus (18) configured to control movement of at least one movable object (2a, 2b) relative to a camera capturing a sequence of images of a scene (10), the apparatus comprising a processing device (23) and a memory device (30) having stored therein instructions, which, when executed by the processing device (23), cause the apparatus (18) to:

   - retrieve (40) position information of the at least one movable object (2a, 2b);
   - compare (41) the retrieved position information with a viewing zone (4a, 4b) of the camera to determine if the movable object (2a, 2b) is about to interfere with the viewing zone (4a, 4b);
   - generate (42) an alert for the at least one movable object (2a, 2b) in case the movable object is about to interfere with the viewing zone (4a, 4b); and
   - control (43) movement of the at least one movable object (2a, 2b) responsive to the alert.

**Fig. 1**

| Retrieve position information of movable object | 40 |
| Compare position information with viewing zone of camera | 41 |
| Generate alert in case of imminent interference | 42 |
| Control movement of movable object responsive to alert | 43 |

**Fig. 2**

**Fig. 3**

**Fig. 4**

**Fig. 5**

**Fig. 6**

Europäisches
Patentamt

European
Patent Office

Office européen
des brevets

# EUROPEAN SEARCH REPORT

Application Number

EP 15 30 7108

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | SHARKEY N ET AL: "The Coming Robot Crime Wave", COMPUTER, IEEE, US, vol. 43, no. 8, 1 August 2010 (2010-08-01) , pages 116-115, XP011316860, ISSN: 0018-9162 * First paragraph. * ----- | 1-10 | INV. G06K9/00 G05D1/00 G01C21/00 H04N5/00 |
| Y | US 2008/084295 A1 (LIBBY VIBEKE [US]) 10 April 2008 (2008-04-10) * 3 * ----- | 1-10 | |
| X | US 2004/105004 A1 (RUI YONG [US] ET AL) 3 June 2004 (2004-06-03) * abstract * * 101 * ----- | 1-3,5,6, 10 | |
| | | | TECHNICAL FIELDS SEARCHED (IPC) |
| | | | G06K G05D G01C B60W H04N |

The present search report has been drawn up for all claims

| Place of search | Date of completion of the search | Examiner |
|---|---|---|
| The Hague | 25 May 2016 | Grigorescu, Simona |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 30 7108

This annex lists the patent family members relating to the patent documents cited in the above-mentioned European search report.
The members are as contained in the European Patent Office EDP file on
The European Patent Office is in no way liable for these particulars which are merely given for the purpose of information.

25-05-2016

| Patent document cited in search report | | Publication date | Patent family member(s) | Publication date |
|---|---|---|---|---|
| US 2008084295 | A1 | 10-04-2008 | NONE | |
| US 2004105004 | A1 | 03-06-2004 | NONE | |

EPO FORM P0459

For more details about this annex : see Official Journal of the European Patent Office, No. 12/82